# EUROPEAN PATENT SPECIFICATION

(11) **EP 1 037 358 B1**
(45) Date of publication and mention of the grant of the patent: **29.06.2005**
(21) Application number: 99104617.8
(22) Date of filing: 09.03.1999
(51) Int. Cl.: H02J 7/10

(54) **Charger for batteries**
Ladegerät für Batterien
Chargeur de batteries

(43) Date of publication of application: 20.09.2000
(73) Proprietor: Sony International (Europe) GmbH, 10785 Berlin (DE)
(72) Inventor: Ogawa, Naohiro, c/o Sony International(Europe)GmbH, 85609 Aschheim (DE)
(74) Representative: Rupp, Christian, Dipl.Phys.

(56) References cited:
- EP-A- 0 862 257
- US-A- 5 694 021
- US-A- 5 808 447
- PATENT ABSTRACTS OF JAPAN vol. 099, no. 003, 31 March 1999 (1999-03-31) & JP 10 327536 A (PACIFIC IND CO LTD), 8 December 1998 (1998-12-08)

## Description

The present invention relates to a method and a circuitry for charging batteries, such as for example Li-Ion batteries.

A method and circuit as defined in the preamble of independent claims 1 and 9 effecting a continuos or linear charging of the battery at a high current level when the battery voltage is higher than a predetermined threshold voltage, and effecting continuos trickle charging at a low current level when the battery voltage is lower than a predetermined threshold voltage, is known from US-A-5,694,021.

Charging circuits for charging Li-Ion batteries are often incorporated in devices which are powered by such a battery. Such a device can be for example a camcorder or a mobile phone terminal, i.e. a mobile station. Usually a control unit of the device, for example a microprocessor is controlling the charging circuit for charging the battery. In case the battery power level, i.e. the battery voltage is very low, the control unit of the device can not work as long as the battery voltage is insufficient for the operation of the microprocessor. Furthermore Li-Ion batteries and Li-Ion polymer batteries shall be charged carefully when the battery voltage is very low, i.e. when the battery is in an overdischarged condition. When the Li-Ion battery or Li-Ion polymer is overdischarged, the charging has to be effected with a low current to assure the safety of the Li-Ion battery, and to prevent a damage of the battery and to protect the protection circuit in the Li-Ion battery.

Therefore usually a charging circuit for Li-Ion batteries contains a so-called trickle charge stage for charging the battery in case the level of the battery voltage is lower than the predetermined threshold value. When the battery voltage is higher than the threshold value, the charging circuit is controlled by the control device (microprocessor). Usually such trickle charge stages are implemented by a voltage limiter such as a Z-diode for setting the trickle charge threshold, a current limiter (resistor) and a power diode or transistor. Figure 5 shows an example for such a known trickle charge stage. A Z-diode 5 as a voltage limiter sets the trickle charge threshold. Below this trickle charge threshold the charging current through a power transistor 2 is limited by a current limiter (resistor) 4. Note that in the trickle charge stage the current is limited and defined only by the resistor 4. Tolerances of the resistor 4 therefore can lead to a variation of the charging current such that the charging current can not be limited very exactly.

A further disadvantage of the known trickle charge stage shown in figure 5 is that it needs additional to the normal stage circuit space in the device and furthermore is cost-consuming. The Z-diode 5 creates the disadvantage that it is quite costly particularly if it has to assure the above-mentioned threshold voltage defined within small tolerances. In case the voltage of the battery 1 exceeds the threshold voltage of the Z-diode 5, the charging current and charging voltage is no longer defined by the trickle charge stage, but by the control unit (microprocessor) 3.

Regarding the power transistor of the charging circuitry, according to the state of the art there are two techniques to deal both with trickle charging and normal charging. It is to be noted that in the trickle charging phase the voltage drop at the power transistor is high, such that a big transistor with a large casing is needed in view of the heat dissipation.

According to the first technique, a first power transistor in a trickle charge block is used for trickle charging and a second power transistor in a normal charge block is used for the normal charging phase during which the voltage drop at the transistor is smaller but the charging current is higher. Therefore there is the disadvantage that an additional transistor is needed for trickle charging.

According to the second technique known from the prior art only one big transistor is needed having the disadvantage that more space in an electronic device is needed if the transistor is part of an internal charging circuitry.

The Japanese patent application JP-A-10/327 536 discloses a charging circuitry having a constant voltage circuitry, a current sense circuitry, a voltage controlling circuitry, a controlling device, a charging control block, a constant voltage controlling circuitry, a micro-computer, an output terminal, a power supply terminal, a resistor, a current controlling circuitry and a constant voltage controlling terminal. The charging circuitry according to this prior art controls the charging voltage, does not need a heat sink block and is particularly adapted to charge several types of batteries put into the charger. According to this prior art the difference between the input voltage and the output voltage as well as the current value of or through the constant voltage circuit are detected by the micro-computer. Then the heat consumption of the controlling device is calculated. Then a on/off control is effected in order to avoid an overheating of the controlling element. Such a known pulsed trickle charging circuitry is adapted to be used as a multi-battery charger as external charger for different electronic devices and is optimized for NiCd batteries and not for batteries needing trickle charging, such as Li-ion batteries, in case they are overdischarged.

However, such a multi-battery charger is not adapted to be used as an internal charging circuitry and cannot be used for Li-Ion batteries acquiring the so-called trickle charging as set forth above.

Therefore it is the object of the present invention to provide for a technique which is adapted to assure an effective and secure charging for Li-Ion batteries.

The above object is achieved by means of the features of the independent claims 1 and 9. The dependent claims develop further the central idea of the present invention

According to the present invention therefore a method for charging a battery by means of a charging circuitry comprising a power transistor is provided. Thereby the battery voltage is detected. In case the detected battery voltage is beneath a predetermined threshold value, a pulsed charging of the battery is effected. In case the detected battery voltage equals the or is higher than the predetermined threshold value, a continuous charging of the battery is effected. Due to the pulsed trickle charging the average load on the transistor can be reduced and therefore the dimensions of the casing of the transistor necessary for the heat dissipation can be reduced which is particularly of importance in case the power transistor is part of a internal charging circuitry of an electronic device such as a cellular telephone. Note that the load on the transistor can be controlled by varying the duty cycle of the pulsed charging. Furthermore only one small transistor is necessary both for trickle charging and normal charging in case the pulsed trickle charging according to the present invention is used.

During the pulsed charging of the battery the charge current can be slightly smaller (safety margin) than the charge current of the continuous (normal) charging of the battery. The charge voltage of the pulses can correspond to the charge voltage of the continuous charging of the battery.

The predetermined threshold voltage thereby can be set such that below the predetermined voltage the battery is in an overdischarged condition necessitating trickle charging. Furthermore the predetermined threshold value can be set such that above the threshold value the battery voltage is sufficient for the operation a microprocessor of an electronic device to be supplied by the battery. Above the threshold value therefore the microprocessor can control the charging of the battery.

The duty cycle of the pulsed charging can be varied depending on the temperature of the battery.

The power transistor can furthermore be used for controlling the charge current and the continuous charging phase.

The pulsed charging can be effected by on/off switch controlling the power transistor.

According to the present invention furthermore a circuitry for charging batteries is provided. That circuitry comprises a voltage detector for detecting the voltage of a battery and a charging block controlled by the voltage detector. The voltage detector controls the charging block such that in case the detected battery voltage is beneath a predetermined threshold voltage, the charging block effects a pulsed charging of the battery. In case the detected battery voltage equals or exceeds the predetermined threshold voltage, the charging block effects a continuous charging of the battery.

The voltage detector can control a on/off-block to disable the power on function a system microcomputer in case the detected battery voltage is beneath a predetermined threshold voltage. In case the detected battery voltage equals or exceeds the predetermined threshold voltage, the power on function of the system microcomputer is enabled and the system microcomputer can control the continuous charging of the charging block.

The charging block can comprise a charge control IC and an oscillating circuit connected to the ground terminal of the charged control IC such that the CR constant (time constant) of the oscillating circuit determines the duty cycle of the pulsed charging.

Temperature compensating means can be provided for detecting the ambient temperature of the battery and for changing the duty cycle of the pulsed charging dependent on the detected temperature.

The temperature compensating means can comprise only hardware elements, as software defined elements cannot operate below a predetermined operation voltage.

The duty cycle of the pulsed charging can be changed by switching a resistor in parallel to an oscillating circuit determining the duty cycle of the pulsed charging.

The pulsed charging can be effected by on/off switch controlling a power transistor.

The power transistor can furthermore be provided for controlling the charge current and charge voltage in the continuous charging phase.

In the following further features, advantages and objects of the present invention will come clearer from the description of embodiments of the present invention and by referencing to the enclosed figures of the drawings.
Figure 1 shows a general block diagram of an embodiment of the present invention,
Figure 2 shows a detailed diagram of a charging circuitry according to the present invention,
Figure 3 shows the detailed structure of a temperature compensating block according to the present invention,
Figure 4 shows the pulsed charging voltage used in the trickle charge phase according to the present invention,
Figure 5 shows a known trickle charge circuitry.

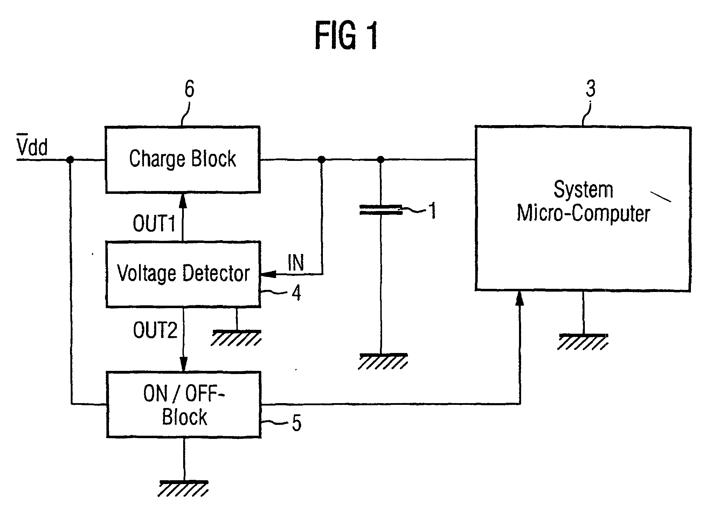

With reference to figure 1 the general principle of the present invention will be explained. As shown, generally a charging circuit according to the present invention comprises an input for the charge voltage V_{DD}, a hardware charge block 6, a voltage detector 4, a on/off-block 5, a battery such as a Li-Ion battery 1 and a control unit (microcomputer) 3 of an electronic device (such as a cellular telephone) to be supplied by the battery 1.

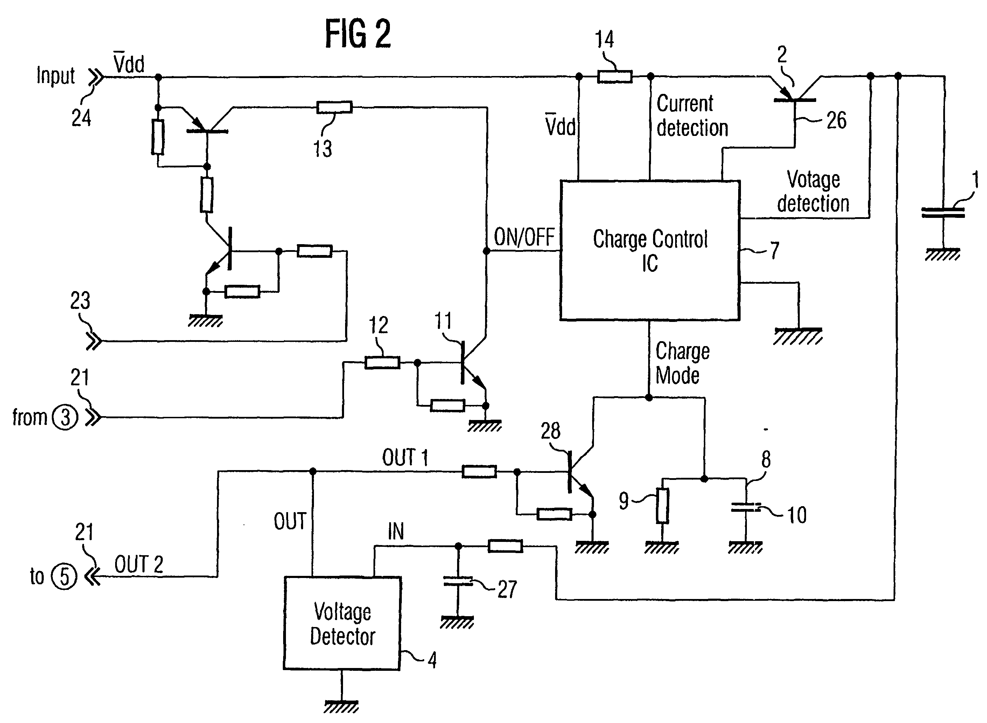

It is now assumed that the charger is physically connected (the logical signal at an input 23 in figure 2 is therefore on a high level). The voltage V_{DD} is therefore supplied externally. The voltage detector 4 senses at its input side IN the battery voltage. The voltage detector 4 detects whether the battery voltage is higher or smaller than a predetermined threshold value V_{THR}.

If the battery voltage is smaller than the predetermined threshold voltage V_{THR} it is detected that the battery 1 is in an overdischarged condition necessitating trickle charging. Furthermore the predetermined threshold value is set such that above the threshold value the battery voltage is sufficient for the operation of the microprocessor 3. Above the threshold value therefore the microprocessor 3 can control the charging of the battery 1.

The voltage detector 4 outputs a first logical output signal OUT1 and a second logical output signal OUT2 depending whether the sensed battery voltage is higher or smaller than the predetermined threshold voltage V_{THR}. Note that the operation voltage of the voltage detector 4 is lower than the minimum voltage of the battery 1. Therefore, if for example the minimum voltage of the battery 1 is about 1. V (under which voltage the battery 1 is dead), the operation voltage of the voltage detector is for example set to 0.6 V.

Note that in case the battery is dead the charge control IC 7 still operates correctly in the pulsed trickle charged mode, but the battery will never be charged as a battery protection circuit (not shown) is always open such that the supply voltage is never connected to the battery cell.

In case the voltage detector 4 detects that the battery voltage 1 is smaller than the threshold voltage V_{THR}, the logical output signal OUT2 of the voltage detector 4 is for example on a low level, such that the on/off-block 5 is controlled to hold the system microcomputer 3 in a state in which the power on function is disabled. Note that in case the battery voltage 1 is beneath the threshold voltage V_{THR}, the voltage of the battery 1 is not sufficient for an operation of the system microcomputer 3 such that the system microcomputer 3 cannot control the charging of the battery 1 if the battery 1 is in an overdischarged state.

As long as the voltage detector 4 detects that the battery voltage is smaller than the threshold voltage V_{THR}, the first logical output signal OUT1 of the voltage detector 4 is for example on a low level to activate the charge block 6. Note that the hardware charge block 6 does not need a predetermined voltage level for its operation. Therefore in case the battery voltage is smaller than the threshold voltage V_{THR}, the hardware charge block 6 can control the charging voltage and charging current for the battery 1.

The threshold voltage can for example be set to about 3.2 V. Note that the voltage detector 4 can have a hysteresis between 3.2 V and 3.3 V. As long as the battery voltage is smaller than 3.2 V, the power on function of the system micro-computer 3 is disabled by the on/off-block 5 which is controlled by the logical output signal OUT2 of the voltage detector 4 in case a charger is physically connected. Therefore in this case a pulsed trickle charging is effected controlled by hardware.

In case the detected battery voltage exceeds 3.3 V, the on/off-block 5 is controlled by the logical output signal out 2 of the voltage detector 4 to "wake up" the control unit (micro-computer) 3 such that in this case the charging is controlled by the micro-computer 3.

The charging circuitry is shown in detail in figure 2 is particularly adapted as an internal charging circuit for example for cellular telephones with Li-Ion batteries.

As shown in figure 2 according to the present invention a PNP power transistor 2 is used in a charging circuitry to charge a Li-Ion battery 1. The PNP power transistor 2 is both used during trickle charging i.e., when the battery voltage is not higher than a predetermined threshold, and for normal charging, i.e. when the battery voltage is higher than this predetermined threshold voltage V_{THR}.

A charge control IC 7 is provided being supplied by the power supply voltage V_{DD} which can be about 5 V. The charge control IC 7 has an input for a current detection for the current flowing through a current limiter (resistor) 14 and the PNP power transistor 2 as well as a voltage detection input to detect the battery voltage.

Since the voltage difference between the power supply input 24 and the battery voltage is very high in case of trickle charging, the PNP power transistor 2 has to be designed in a bigger, more temperature resistant package for trickle charging than in the case that the power transistor is only used in a normal charging situation.

The voltage detector 4 detects the voltage of the battery 1 which is passed through a low-pass filter 27 and then input at the terminal IN of the voltage detector 4. The low-pass filtering by the low-pass filter 27 provides for a smooth detection of the battery voltage. The voltage detector 4 outputs a logical signal OUT which is supplied as a first logical signal OUT1 to a NPN transistor 28 and which is furthermore transmitted as a second logical output signal OUT2 to the on/off-block 5. As long as the voltage detected by the voltage detector 4 is smaller than the predetermined threshold voltage V_{THR}, the output signal OUT of the voltage detector 4 is on a low level such that the on/off-block (5) (see Figure 1) keeps the system micro-computer 3 in state in which the power on is disabled.

As long as the output signal OUT of the voltage detector 4 is low, the NPN transistor 28 is shut off. In this state the charge mode terminal of the charge control IC 7 is connected to ground via an oscillating circuit 8 comprising a parallel connected resistor 9 and a capacitor 10. In this state the signal at the charge mode input of the charge control IC 7 has a triangular wave form corresponding to the charging/discharging of the capacitor 10. Correspondingly the control output of the charge control IC to the PNP power transistor 2 has a pulse shaped wave form.

Note that the charge control IC 7 can be a commercial IC as for example the ICTK 732 42MCLH of the Japanese company Toko. This charge control IC 7 has a short protection function. According to the present invention this function is applied for the trickle charge mode. The short protection is thereby controlled by the charge control IC 7 with the external time constant CR of the oscillating circuit 8. The charge control IC 7 therefore on/off controls the PNP power transistor 2 with its output signal 26.

According to the circuitry as shown in figure 2, as long as the voltage detector 4 detects that the battery voltage is below a predetermined threshold voltage V_{THR} and therefore a trickle charging of the battery 1 is necessary, the NPN transistor 28 is switched off and the charge control IC 7 controls the PNP power transistor 2 to a pulse charging by switching it on/off. During the pulses the charging voltage corresponds to the value of the continuous (normal) charging phase. During the pulses the charging current can be slightly smaller than the value of the continuous (normal) charging phase. However, by means of the pulse formed charging it is assured that the transistor 2 is not overloaded and overheated during the trickle charge mode.

According to the present invention therefore in the trickle charge mode pulsed charging is effected, wherein the current settings and the voltage settings can be the same as in the case of normal charging. While pulse charging the average load of the power transistor 2 in trickle charge mode is lower than without pulse charging and the transistor can be designed smaller. In case of pulse-controlled trickle charging the power transistor 2 will not become overheated even if it is designed in small dimensions and the requirements of the Li-Ion battery 1 for charging in case of overdischarged conditions are respected.

As shown in figure 2, the circuitry according to the present invention comprises further inputs 22,23. The input 22 is supplied with a logical signal from the system microcomputer 3 for normal charging in case the normal charging is completed or has to be disabled. In case the logical input signal 22 is low, the charging is enabled, and in case the logical input signal 22 goes on a higher level, the charging is disabled by means of a switch 12 comprising a transistor 11. The logical input signal 22 goes to a higher level to disable the charging of the Li-Ion battery 1 for example in the case that the temperature is too high or to low or the (normal) charging is completed.

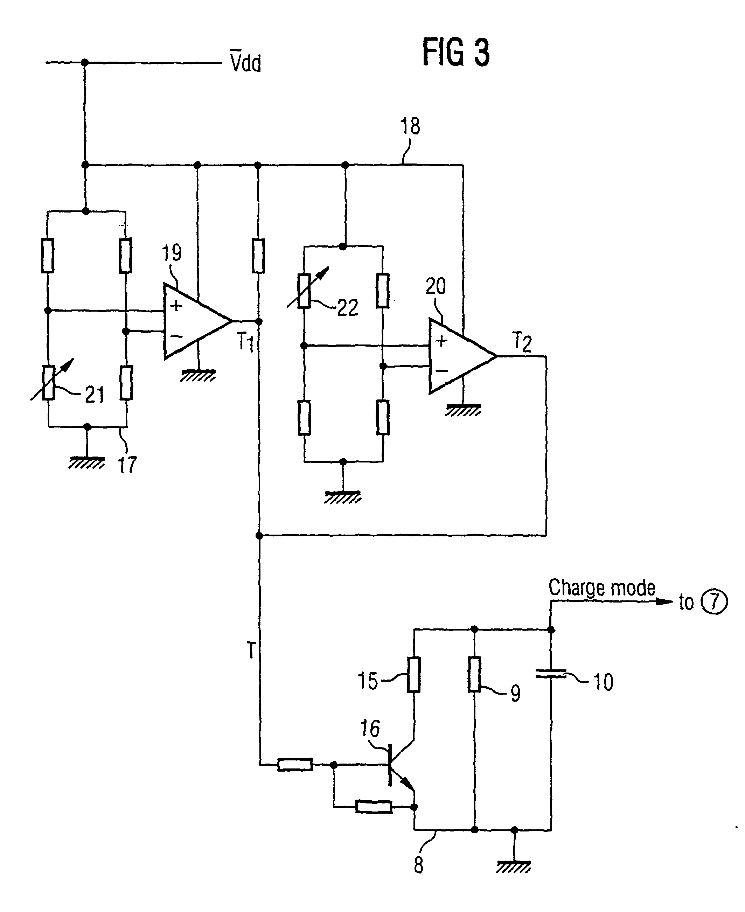

According to the present invention a temperature compensation block for the charging circuitry shown in figure 3 can be provided. As has been said forth above the pulse charging, and to be more precise, the duty cycle of the pulsed charging of the battery 1 and the trickle charged mode is defined by the CR (time) constant of the oscillating circuitry 8 comprising a resistor 9 and a capacitor 10. The temperature compensation block is shown in figure 3 therefore connects a second resistor 15 in parallel to the first resistor 9 of the oscillating circuit 8 in case an abnormal ambient temperature of the battery 1 is detected. By parallely connecting the second resister 15 to the oscillating circuit 8 the CR constant of the oscillating circuit 8 is lowered (as the effective resistance value is lowered) and thus the duty cycle and the corresponding load on the transistor 2 is lowered.

The parallel connection of the second resistor is controlled by a NPN transistor 16. The NPN transistor 16 is controlled by a logical signal T. In case the detected temperature is in a normal state, as for example higher than minus 10°C and less than 45°C, the logical signal T is on a high level thus turning on the NPN transistor 16.

The temperature compensation unit comprises a high temperature detecting block 17 of the open drain or open collector type and a low temperature detecting block 18 of the open drain or open collector type. The output signal of the high temperature detecting block T₁ is on a higher level for example if the detected ambient temperature of the battery 1 is lower than 45°C. On the other hand, the logical output signal T₂ of the low temperature detecting block 18 is on a higher level in case the detected ambient temperature of the battery 1 is higher than minus 10°C.

The high temperature detecting block 17 comprises a thermistor 21 and an operational amplifier 19. The low temperature detecting block 18 comprises a second thermistor 22 and a second operational amplifier 20.

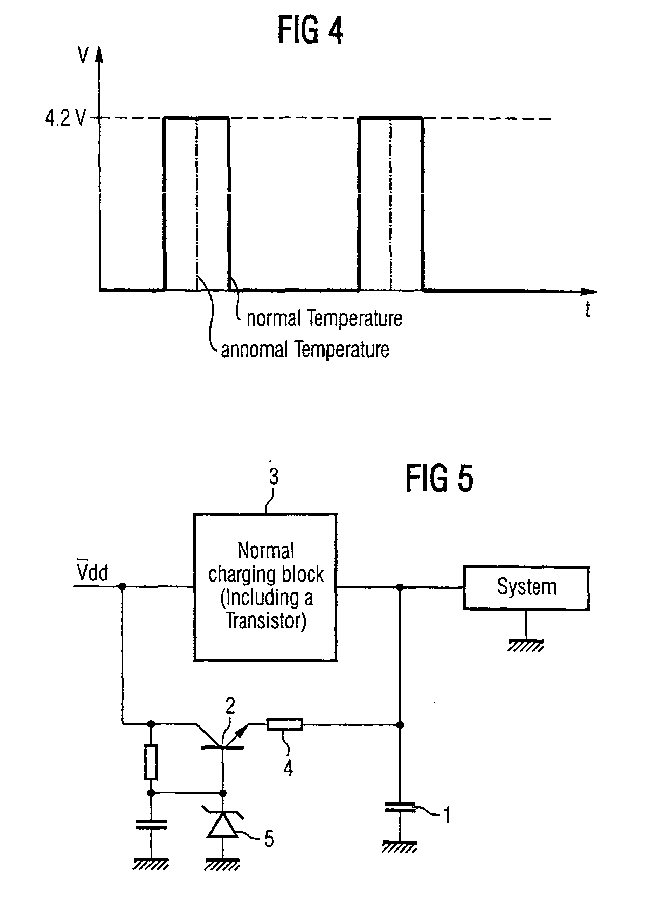

Figure 4 shows the pulsed trickle charging according to the present invention. The maximum charging voltage during the pulses thereby corresponds to the an usual voltage of f.e. 4.2 V. In case of a normal detected ambient temperature of the battery the duty cycle can be for example 30%, wherein in the case of an abnormal detected temperature the duty cycle can be reduced to the half thereof (for example 15%). Particularly the duty cycle is reduced to the half in case the resistance value of the second resistor 15 corresponds exactly to the resistance value of the first resistor 9 of the oscillating circuitry 8.

According to the circuitry of the present invention therefore the Z-diode according to the prior art can be surpressed. One power transistor 2 is sufficient for the charging both in the trickle charging mode and the normal charging mode. Due to the pulsed trickle charging the transistor can be designed in small dimensions though the load and heat dissipation requirements of the transistor are respected. The small dimensions are particularly advantageous in case the transistor is part of an internal charging circuitry for example of a handheld electronic device such as a cellular telephone.

According to the present invention a technique for charging a Li-Ion or Li-Ion polymer battery by means of a charging circuitry comprising a power transistor is proposed. Li-Ion or Li-Ion polymer batteries need a so called trickle charge when overdischarged, i.e. a charging with low current, to protect the battery capacity and safety. The required smaller charging current in the trickle charge mode is achieved by a pulse charge mode.

## Claims

1. A method for charging a battery by means of a charging circuitry comprising a power transistor (2),
comprising the following steps:
- detecting (4) the battery voltage,
- in case the detected battery voltage is beneath a predetermined threshold voltage, effecting a trickle charging (7, 8) of the battery (1), and
- in case the detected battery voltage equals or exceeds the predetermined threshold voltage, effecting a continuous charging of the battery (1),
**characterised in that**
the trickle charging consists in a pulsed charging.

2. A method according to claim 1,
**characterized in that**
during the pulsed charging of the battery (1), the charge voltage of the pulses corresponds to the charge voltage of the continuous charging of the battery (1).

3. A method according to claim 1 or 2,
**characterized in that**
during the pulsed charging of the battery (1), the charge current during the pulses corresponds to the charge current of the continuous charging of the battery (1).

4. A method according to anyone of the preceding claims,
**characterized in that**
the predetermined threshold voltage is set such that below the predetermined voltage the battery (1) is in an overdischarged condition and such that above the threshold voltage the battery voltage is sufficient for the operation a control unit (3) of an electronic device to be supplied by the battery (1).

5. A method according to anyone of the preceding claims,
**characterized in that**
the duty cycle of the pulsed charging is varied (16, 17, 18) depending on the temperature of the battery (1).

6. A method according to anyone of the preceding claims,
**characterized in that**
the pulsed charging is effected by on/off switch controlling the power transistor (2).

7. A method according to claim 6,
**characterized in that**
the power transistor (2) is furthermore used for controlling the charge current in the continuous charging phase.

8. A method according to any of the preceding claims,
**characterized in that**
it is used for the charging of Li-Ion or Li-Ion polymer batteries.

9. A circuitry for charging batteries,
comprising a voltage detector (4) for detecting the voltage of a battery (1) and a charging block (6) controlled by the voltage detector (4),
wherein the voltage detector (4) controls the charging block (6) such that
- in case the detected battery voltage is beneath a predetermined threshold voltage, the charging block (6) effects a trickle charging (7, 8) of the battery (1), and
- in case the detected battery voltage equals or exceeds the predetermined threshold voltage, the charging block (6) effects a continuous charging of the battery (1),
**characterised in that**
the trickle charging consists in a pulsed charging.

10. A charging circuitry according to claim 9,
**characterized in that**
the voltage detector (4) controls an on/off-block (5) to disable the power on function of a system microcomputer (3) in case the detected battery voltage is beneath a predetermined threshold voltage, and that in case the detected battery voltage equals or exceeds the predetermined threshold voltage, the system microcomputer (3) controls the continuous charging of the charging block (6).

11. A charging circuitry according to anyone of claims 9 or 10,
**characterized in that**
the charging block (6) comprises a charge control IC (7) and an oscillating circuit (8) connected to the ground terminal of the charge control IC (7) such that the CR constant of the oscillating circuit (8) determines the duty cycle of the pulsed charging.

12. A charging circuitry according to claim 9 to 11,
**characterized in that**
temperature compensating means (16, 17, 18) are provided for detecting the ambient temperature of the battery (1) and for changing the duty cycle of the pulsed charging dependent on the detected temperature.

13. A charging circuitry according to claim 12,
**characterized in that**
the temperature compensating means comprises only hardware elements (16, 17, 18).

14. A charging circuitry according to anyone of claims 9 to 13,
**characterized in that**
the duty cycle of the pulsed charging is changed by connecting a resistor (15) in parallel to an oscillating circuit (8) determining the duty cycle of the pulsed charging.

15. A charging circuitry according to anyone of claims 9 to 14,
**characterized in that**
the pulsed charging is effected by on/off switch controlling a power transistor (2).

16. A charging circuitry according to claim 15,
**characterized in that**
the power transistor (2) is furthermore provided for controlling the charge current in the continuous charging phase.

17. A charging circuitry according to anyone of claims 9 to 16,
**characterized in that**
it is the an internal charging circuitry of an electronic device.

18. A charging circuitry according to anyone of claims 9 to 17,
**characterized in that**
it is designed for the charging of Li-Ion and/or Li-Ion polymer batteries.

19. A mobile telecommunications device,
**characterized in that**
it comprises a charging circuitry according to anyone of claims 9 to 17.

## Patentansprüche

1. Verfahren zum Laden einer Batterie mittels einer Ladeschaltung, die einen Leistungstransistor (2) enthält, welches Verfahren Schritte umfasst zum
- Erfassen (4) der Batteriespannung,
- in dem Fall, in dem die erfasste Batteriespannung unterhalb einer vorbestimmten Schwellenspannung liegt, Bewirken einer Pufferladung (7, 8) der Batterie (1), und
- in dem Fall, in dem die erfasste Batteriespannung gleich der oder größer als die vorbestimmte Schwellenspannung ist, Bewirken einer kontinuierlichen Ladung der Batterie (1),
**dadurch gekennzeichnet, dass** die Pufferladung in einer gepulsten Ladung besteht.

2. Verfahren nach Anspruch 1, **dadurch gekennzeichnet, dass** während der gepulsten Ladung der Batterie (1) die Ladespannung der Impulse der Ladespannung der kontinuierlichen Ladung der Batterie (1) entspricht.

3. Verfahren nach Anspruch 1 oder 2, **dadurch gekennzeichnet, dass** während der gepulsten Ladung der Batterie (1) der Ladestrom während der Impulse dem Ladestrom der kontinuierlichem Ladung der Batterie (1) entspricht.

4. Verfahren nach einem der vorhergehenden Ansprüche, **dadurch gekennzeichnet, dass** die vorbestimmte Schwellenspannung derart gesetzt wird, dass sich die Batterie (1) unterhalb der vorbestimmten Spannung in einem Überentladungszustand befindet, und derart, dass die Batteriespannung oberhalb der Schwellenspannung für den Betrieb einer Regeleinheit (3) einer elektronischen Einrichtung, die durch die Batterie (1) zu versorgen ist, ausreichend ist.

5. Verfahren nach einem der vorhergehenden Ansprüche, **dadurch gekennzeichnet, dass** der Betriebszyklus der gepulsten Ladung abhängig von der Temperatur der Batterie (1) variiert (16, 17, 18) wird.

6. Verfahren nach einem der vorhergehenden Ansprüche, **dadurch gekennzeichnet, dass** die gepulste Ladung durch eine EIN/AUS-Schaltsteuerung des Leistungstransistors (2) bewirkt wird.

7. Verfahren nach Anspruch 6, **dadurch gekennzeichnet, dass** der Leistungstransistor (2) überdies zum Regeln des Ladestroms in der kontinuierlichen Ladephase benutzt wird.

8. Verfahren nach einem der vorhergehenden Ansprüche, **dadurch gekennzeichnet, dass** es für die Ladung von Li-Ionen-Batterien oder Li-Ionen-Polymerbatterien benutzt wird.

9. Schaltung zum Laden von Batterien, die einen Spannungsdetektor (4) zum Erfassen der Spannung einer Batterie (1) und einen Ladeblock (6) umfasst, der durch den Spannungsdetektor (4) gesteuert wird, wobei der Spannungsdetektor (4) den Ladeblock (6) derart steuert, dass
- in dem Fall, in dem die erfasste Batteriespannung un-terhalb einer vorbestimmten Schwellenspannung liegt, der Ladeblock (6) eine Pufferladung (7, 8) der Batterie (1) bewirkt, und
- in dem Fall, in dem die erfasste Batteriespannung gleich der oder größer als die vorbestimmte(n) Schwellenspannung ist, der Ladeblock (6) eine kontinuierliche Ladung der Batterie (1) bewirkt, **dadurch gekennzeichnet**, dass die Pufferladung in einer gepulsten Ladung besteht.

10. Schaltung zum Laden nach Anspruch 9, **dadurch gekennzeichnet, dass** der Spannungsdetektor (4) einen EIN/AUS-Block (5) steuert, um die Strom-EIN-Funktion eines System-Mikrocomputers (3) in dem Fall, in dem die erfasste Batteriespannung unterhalb einer vorbestimmten Schwellenspannung liegt, unwirksam zu machen, und dass in dem Fall, in dem die erfasste Batteriespannung gleich der oder größer als die vorbestimmte(n) Schwellenspannung ist, der System-Mikrocomputer (3) die kontinuierliche Ladung mittels des Ladeblocks (6) steuert.

11. Schaltung zum Laden nach Anspruch 9 oder 10, **dadurch gekennzeichnet, dass** der Ladeblock (6) eine Ladesteuerungs-IC (7) und eine Oszillatorschaltung (8) umfasst, die mit dem Erdanschluss der Ladesteuerungs-IC (7) verbunden ist, so dass die CR-Konstante der Oszillatorschaltung (8) den Betriebszyklus der gepulsten Ladung bestimmt.

12. Schaltung zum Laden nach den Ansprüchen 9 bis 11, **dadurch gekennzeichnet, dass** Temperaturkompensierungsmittel (16, 17, 18) zum Erfassen der Umgebungstemperatur der Batterie (1) und zum Ändern des Betriebszyklus der gepulsten Ladung abhängig von der erfassten Temperatur vorgesehen sind.

13. Schaltung zum Laden nach Anspruch 12, **dadurch gekennzeichnet, dass** die Temperaturkompensierungsmittel nur Hardware-Elemente (16, 17, 18) enthalten.

14. Schaltung zum Laden nach einem der Ansprüche 9 bis 13, **dadurch gekennzeichnet, dass** der Betriebszyklus der gepulsten Ladung durch Parallelschalten eines Widerstands (15) zu der Oszillatorschaltung (8) geändert wird, die den Betriebszyklus der gepulsten Ladung bestimmt.

15. Schaltung zum Laden nach einem der Ansprüche 9 bis 14, **dadurch gekennzeichnet, dass** die gepulste Ladung durch EIN/AUS-Schaltsteuerung eines Leistungstransistors (2) bewirkt wird.

16. Schaltung zum Laden nach Anspruch 15, **dadurch gekennzeichnet, dass** der Leistungstransistor (2) überdies zum Regeln des Ladestroms in der kontinuierlichen Ladephase vorgesehen ist.

17. Schaltung zum Laden nach einem der Ansprüche 9 bis 16, **dadurch gekennzeichnet, dass** sie eine interne Schaltung zum Laden einer elektronischen Einrichtung ist.

18. Schaltung zum Laden nach einem der Ansprüche 9 bis 17, **dadurch gekennzeichnet, dass** sie für die Ladung von Li-Ionen-Batterien und/oder Li-Ionen-Polymerbatterien ausgelegt ist.

19. Mobile Telekommunikationseinrichtung, **dadurch gekennzeichnet, dass** sie eine Schaltung zum Laden nach einem der Ansprüche 9 bis 17 umfasst.

## Revendications

1. Procédé pour charger une batterie au moyen d'un circuit de chargement comprenant un transistor de puissance (2),
comprenant les opérations suivantes consistant à :
- détecter (4) la tension de la batterie,
- dans le cas où la tension de batterie détectée est inférieure à une tension de seuil prédéterminée, effectuer un chargement de compensation (7, 8) de la batterie (1) et
- dans le cas où la tension de batterie détectée est supérieure ou égale à la tension de seuil prédéterminée, effectuer un chargement en continu de la batterie (1),
**caractérisé en ce que**
le chargement de compensation consiste en un chargement par impulsions.

2. Procédé selon la revendication 1,
**caractérisé en ce que**
pendant le chargement par impulsions de la batterie (1), la tension de charge des impulsions correspond à la tension de charge du chargement en continu de la batterie (1).

3. Procédé selon la revendication 1 ou 2,
**caractérisé en ce que**
pendant le chargement par impulsions de la batterie (1), le courant de charge pendant les impulsions correspond au courant de charge du chargement en continu de la batterie (1).

4. Procédé selon l'une quelconque des revendications précédentes,
**caractérisé en ce que**
la tension de seuil prédéterminée est fixée de telle façon qu'au-dessous de la tension prédéterminée la batterie (1) est dans un état surdéchargé et de telle façon qu'au-dessus de la tension de seuil la tension de la batterie est suffisante pour le fonctionnement d'une unité de commande (3) d'un dispositif électronique devant être alimenté par la batterie (1).

5. Procédé selon l'une quelconque des revendications précédentes,
**caractérisé en ce que**
on fait varier le coefficient d'utilisation du chargement par impulsions (16, 17, 18) en fonction de la température de la batterie (1).

6. Procédé selon l'une quelconque des revendications précédentes,
**caractérisé en ce que**
le chargement par impulsions est effectué par une commutation d'état « débloqué / bloqué » commandant le transistor de puissance (2).

7. Procédé selon la revendication 6,
**caractérisé en ce que**
le transistor de puissance (2) est en outre utilisé pour commander le courant de charge dans la phase de chargement en continu.

8. Procédé selon l'une quelconque des revendications précédentes,
**caractérisé en ce que**
il est utilisé pour le chargement de batteries du type lithium - ion ou du type lithium - polymère.

9. Circuit pour le chargement de batteries,
comprenant un détecteur de tension (4) pour détecter la tension d'une batterie (1) et un bloc de chargement (6) commandé par le détecteur de tension (4),
dans lequel le détecteur de tension (4) commande le bloc de chargement (6) de telle façon que
- dans le cas où la tension de batterie détectée est inférieure à une tension de seuil prédéterminée, le bloc de chargement (6) effectue un chargement de compensation (7, 8) de la batterie (1) et
- dans le cas où la tension de batterie détectée est supérieure ou égale à la tension de seuil prédéterminée, le bloc de chargement (6) effectue un chargement en continu de la batterie (1),
**caractérisé en ce que**
le chargement de compensation consiste en un chargement par impulsions.

10. Circuit de chargement selon la revendication 9,
**caractérisé en ce que**
le détecteur de tension (4) commande un bloc en service / hors service (5) pour désactiver la fonction d'alimentation d'un micro-ordinateur de système (3) dans le cas où la tension de batterie détectée est inférieure à une tension de seuil prédéterminée et **en ce que** dans le cas où la tension de batterie détectée est supérieure ou égale à la tension de seuil prédéterminée, le micro-ordinateur de système (3) commande le chargement en continu du bloc de chargement (6).

11. Circuit de chargement selon l'une quelconque des revendications 9 ou 10,
**caractérisé en ce que**
le bloc de chargement (6) comprend un Cl de commande de charge (7) et un circuit oscillant (8) connecté à la borne de terre du Cl de commande de charge (7) de telle façon que la constante CR du circuit oscillant (8) détermine le coefficient d'utilisation du chargement par impulsions.

12. Circuit de chargement selon la revendication 9 à 11,
**caractérisé en ce que**
il y a un moyen de compensation de la température (16, 17, 18) pour détecter la température de la batterie (1) et pour faire varier le coefficient d'utilisation du chargement par impulsions en fonction de la température détectée.

13. Circuit de chargement selon la revendication 12,
**caractérisé en ce que**
le moyen de compensation de la température comprend seulement des éléments matériels (16, 17, 18).

14. Circuit de chargement selon l'une quelconque des revendications 9 à 13,
**caractérisé en ce que**
on fait varier le coefficient d'utilisation du chargement par impulsions en reliant une résistance (15) en parallèle à un circuit oscillant (8) déterminant le coefficient d'utilisation du chargement par impulsions.

15. Circuit de chargement selon l'une quelconque des revendications 9 à 14,
**caractérisé en ce que**
le chargement par impulsions est effectué par un commutateur d'état débloqué / bloqué commandant un transistor de puissance (2).

16. Circuit de chargement selon la revendication 15,
**caractérisé en ce que**
le transistor de puissance (2) sert de plus à commander le courant de charge dans la phase de chargement en continu.

17. Circuit de chargement selon l'une quelconque des revendications 9 à 16,
**caractérisé en ce que**
il est le circuit de chargement interne d'un dispositif électronique.

18. Circuit de chargement selon l'une quelconque des revendications 9 à 17,
**caractérisé en ce que**
il est conçu pour le chargement de batteries du type lithium - ion et / ou du type lithium - polymère.

19. Dispositif de télécommunication mobile,
**caractérisé en ce que**
il comprend un circuit de chargement selon l'une quelconque des revendications 9 à 17.
